# EUROPÄISCHE PATENTANMELDUNG

(11) **EP 2 752 340 A1**
(43) Veröffentlichungstag der Anmeldung: **09.07.2014**
(21) Anmeldenummer: 13192471.4
(22) Anmeldetag: 12.11.2013
(51) Int. Cl.: B60T 8/1755, B60T 8/175, B60T 8/1764

(54) **Verfahren zur Stabilisierung eines Fahrzeugs mit Antriebsmotor**

(30) Priorität: 03.01.2013 DE 102013200037
(71) Anmelder: ROBERT BOSCH GMBH, 70442 Stuttgart (DE)
(72) Erfinder: Baier, Andreas, 70806 Kornwestheim (DE); Leibeling, Frank, 71696 Moeglingen (DE)

(57) **Zusammenfassung**

Bei einem Verfahren zur Stabilisierung eines Fahrzeugs mit Antriebsmotor wird für den Fall, dass zwei Räder des Fahrzeugs einen unterschiedlich hohen Reibwert zur Fahrbahn aufweisen, im Antriebsfall das Giermoment bestimmt und das Moment am Rad mit höherem Reibwert in der Weise beeinflusst, dass das Giermoment einen zugeordneten Schwellenwert unterschreitet.

## Beschreibung

Die Erfindung bezieht sich auf ein Verfahren zur Stabilisierung eines Fahrzeugs mit Antriebsmotor, wobei zwei angetriebene Räder an gegenüberliegenden Fahrzeugseiten des Fahrzeugs einen unterschiedlich hohen Reibwert zur Fahrbahn aufweisen.

### Stand der Technik

Bekannt sind Antriebsschlupfregelungen in Fahrzeugen, bei denen für den Fall, dass die Räder im linken und rechten Seitenbereich des Fahrzeugs unterschiedliche Reibwerte zur Fahrbahn aufweisen, das durchdrehende Rad mit kleinerem Reibwert durch Rücknahme des antreibenden Moments oder durch ein Bremsmoment abgebremst wird. Bei einem üblichen verbrennungsmotorischen Antrieb mit Achsdifferenzial sorgt zusätzlich das Massenträgheitsmoment der Antriebsseite am Differenzial, vor allem des Motors, für eine Reduzierung des Antriebsmomentes auch am Rad mit höherem Reibwert. Auf diese Weise und durch Begrenzung des Bremsmoments am durchdrehenden Rad wird bei Fahrzeugen, die über einen Verbrennungsmotor angetrieben werden, die Entstehung eines zu hohen Giermomentes um die Fahrzeughochachse vermieden.

### Offenbarung der Erfindung

Der Erfindung liegt die Aufgabe zugrunde, mit einfachen Maßnahmen ein motorisch angetriebenes Fahrzeug für den Fall zu stabilisieren, dass zwei Räder des Fahrzeugs im linken und rechten Seitenbereich einen unterschiedlich hohen Reibwert zur Fahrbahn aufweisen.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren kann bei Fahrzeugen mit Antriebsmotor zur Stabilisierung für den Fall eingesetzt werden, dass zwei Räder des Fahrzeugs einen unterschiedlich hohen Reibwert zur Fahrbahn aufweisen. Es handelt sich hierbei insbesondere um angetriebene Räder an gegenüberliegenden Fahrzeugseiten, die sich entweder an der gleichen Fahrzeugachse oder gegebenenfalls auch an unterschiedlichen Fahrzeugenachsen befinden können. Über den Antriebsmotor wird ein antreibendes Moment auf zumindest zwei Räder des Fahrzeugs abgesetzt, wobei für den Fall, dass die zwei angetriebenen Räder einen unterschiedlich hohen Reibwert zur Fahrbahn aufweisen, ein Giermoment um die Fahrzeughochachse entsteht, welches grundsätzlich destabilisierend wirkt. Um diesem Einfluss entgegenzuwirken, ist bei dem erfindungsgemäßen Verfahren vorgesehen, dass bei angetriebenem Fahrzeug das Moment am Rad mit höherem Reibwert so beeinflusst wird, dass das Giermoment und/oder eine mit dem Giermoment zusammenhängende Größe wie zum Beispiel ein Gierimpuls (zeitliches Integral des Giermoments) einen zugeordneten Schwellenwert unterschreitet.

Bei diesem Verfahren, das sich auf den angetriebenen Fahrzustand bezieht, wird somit das Moment am Rad mit höherem Reibwert beeinflusst. Der Grad der Beeinflussung hängt hierbei von dem Giermoment um die Fahrzeughochachse ab; das Moment am Rad mit höherem Reibwert wird so modifiziert, dass das Giermoment unter den Schwellenwert fällt bzw. den Schwellenwert nicht überschreitet. Die Reibwerte an den Rädern müssen sich in hinreichender Weise unterscheiden und somit einen zugeordneten Reibwert-Schwellenwert überschreiten.

Mit dieser Vorgehensweise werden verschiedene Vorteile erzielt. Das Fahrzeug wird stabilisiert bzw. es wird eine instabile Situation vermieden, indem das Moment am Rad mit Hochreibwert modifiziert wird. Das Rad mit niedrigem Reibwert wird dagegen im Rahmen der erfindungsgemäßen Funktion nicht direkt beeinflusst. Allerdings können die Momente an dem Rad mit niedrigem Reibwert beispielsweise im Rahmen einer sich an die erfindungsgemäße Funktion anschließende Antriebsschlupfregelung (ASR) oder eines Antiblockiersystems (ABS) durch Rücknahme des antreibenden Momentes oder durch Aufbringen eines Bremsmomentes beeinflusst werden, wobei im Rahmen der Erfindung Eingriffe anderer Funktionen am Rad mit niedrigem Reibwert beschränkt werden können, um eine Vergrößerung des Antriebsmoments am Rad mit höherem Reibwert zu vermeiden, da dies zu einem unzulässig hohen Giermoment führen würde. Beispielsweise ist es im Fall eines Antriebs mit Differenzialgetriebe sinnvoll, das Bremsmoment am Rad mit niedrigem Reibwert zu beschränken, sofern es das Antriebsmoment am Rad mit höherem Reibwert vergrößert. Die erfindungsgemäße Funktion kann in ein Fahrerassistenzsystem ASR bzw. ABS oder ein sonstiges Assistenzsystem wie zum Beispiel ein elektronisches Stabilitätsprogramm ESP integriert werden.

Vorteilhaft ist des Weiteren, dass der stabilisierende Effekt auch bei unterschiedlichen Antriebskonzepten in Fahrzeugen erreicht wird. Dies betrifft insbesondere Hybridfahrzeuge mit einem Verbrennungsmotor und mindestens einem Elektromotor als Antrieb sowie ausschließlich elektromotorisch angetriebene Fahrzeuge, beispielsweise Fahrzeuge mit mindestens zwei elektrischen Radnabenmotoren an gegenüberliegenden Rädern einer Fahrzeugachse. Da die antreibenden Elektromotoren ein geringeres Massenträgheitsmoment als der Verbrennungsmotor besitzen, ergibt sich bei hybriden Antrieben oder elektromotorischen Antrieben eine entsprechend geringere automatische Stabilisierung durch Trägheitseffekte, so wie dies bei einer Antriebsschlupfregelung bei ausschließlich verbrennungsmotorischem Antrieb der Fall ist. Über den Momenteneingriff am Rad mit hohem Reibwert spielt aber das Massenträgheitsmoment keine oder nur eine untergeordnete Rolle.

Das Verfahren ist vor allem im Übergang von einer Fahrbahn mit homogenem Reibwert zu einer Fahrbahn mit unterschiedlichem Reibwert auf der linken und rechten Fahrzeugseite von Vorteil, da in diesem Fall das Giermoment und die Lenkungsbeeinflussung für den Fahrer meist unerwartet auftreten und die erfindungsgemäße Funktion den Fahrer unterstützt.

Das erfindungsgemäße Verfahren wird vorteilhafterweise in Fahrzeugen mit mindestens einem Elektromotor eingesetzt, der ausschließlich oder zusätzlich zu einem Verbrennungsmotor eingesetzt wird. Grundsätzlich kommt aber auch eine Anwendung des Verfahrens auf Fahrzeuge mit ausschließlich verbrennungsmotorischem Antrieb in Betracht. Auch in diesem Fall wird eine Fahrzeugstabilisierung erreicht, indem das Moment am Rad mit hohem Reibwert so beeinflusst wird, dass der Giermoment-Schwellenwert unterschritten bzw. nicht überschritten wird.

Es kann zweckmäßig sein, das Verfahren erst dann anzuwenden, wenn das Rad mit geringerem Reibwert einen Schlupf-Schwellenwert überschreitet. Das Verfahren wird angewandt, wenn zwei Räder des Fahrzeugs unterschiedlich hohe Reibwerte zur Fahrbahn aufweisen. Dies kann anhand des Überschreitens eines Schlupf-Schwellenwerts erkannt werden. Das Rad mit kleinerem Reibwert wird hierbei den Schlupf-Schwellenwert früher überschreiten als das Rad mit höherem Reibwert, das dementsprechend länger unterhalb des Schlupf-Schwellenwertes liegt.

Es kommen verschiedene Möglichkeiten in Betracht, das Moment am Rad mit höherem Reibwert zu modifizieren. Zum einen kann das Antriebsmoment am Rad mit höherem Reibwert reduziert werden, zum andern ist auch eine Erhöhung des an diesem Rad wirkenden Bremsmomentes möglich. Darüber hinaus kommen aber auch sonstige Maßnahmen in Betracht, welche einen Einfluss auf die Momentenbilanz an dem Rad mit höherem Reibwert haben, beispielsweise die Betätigung einer Kupplung im Antriebsstrang zwischen dem antreibenden Motor und dem Rad mit höherem Reibwert.

Der Giermoment-Schwellenwert, unter den das Giermoment bei Beeinflussung des Momentes am Rad mit höherem Reibwert fallen muss bzw. der nicht überschritten werden darf, hängt ggf. von mindestens einer Fahrzeugzustandsgröße bzw. einer Fahrzeugkenngröße ab. So ist es beispielsweise möglich, eine Abhängigkeit des Giermoment-Schwellenwerts von der Fahrzeuggeschwindigkeit vorzugeben. Um Rückwirkungen auf die Fahrzeuglenkung berücksichtigen zu können, können in den Giermoment-Schwellenwert auch als Fahrzeugkenngröße Achsparameter wie zum Beispiel der Störkrafthebelarm einfließen. Grundsätzlich möglich ist aber auch ein konstanter Giermoment-Schwellenwert.

Das aktuelle Giermoment kann bei angetriebenem Fahrzeug aus dem Unterschied zwischen den antreibenden Kräften am linken und rechten Fahrzeugrad multipliziert mit der Spurweite des Fahrzeugs ermittelt werden.

Das erfindungsgemäße Verfahren läuft zweckmäßigerweise in einem Regel-bzw. Steuergerät im Fahrzeug ab, welches gegebenenfalls Bestandteil eines Fahrerassistenzsystems sein kann, beispielsweise einer Antriebsschlupfregelung ASR, eines Antiblockiersystems ABS oder eines elektronischen Stabilitätsprogrammes ESP. Das Fahrerassistenzsystem ist in das Fahrzeug integriert, das als Antriebsquelle einen Verbrennungsmotor, einen Hybridantrieb mit Vertrennungsmotor und mindestens einem Elektromotor oder einen ausschließlich elektromotorischen Antrieb, beispielsweise über zwei Radnabenmotoren, aufweist.

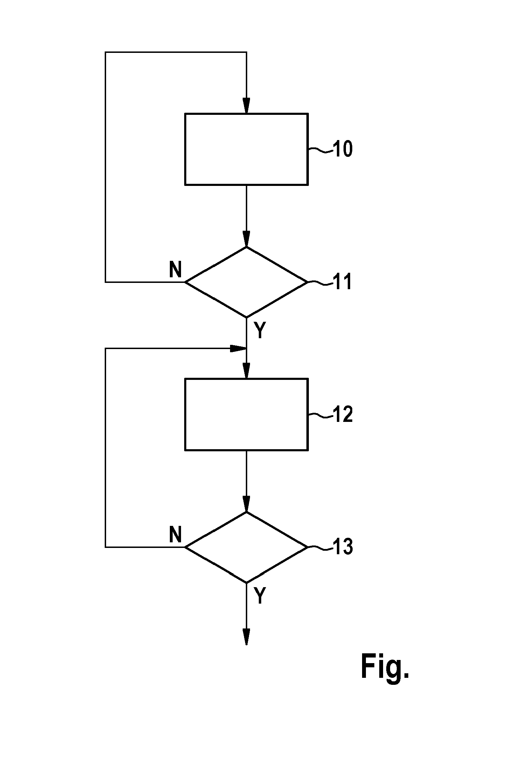

Weitere Vorteile und zweckmäßige Ausführungen sind den weiteren Ansprüchen, der Figurenbeschreibung und der Zeichnung zu entnehmen, in der ein Ablaufschema mit Verfahrensschritten zur Stabilisierung eines Fahrzeugs im Antriebsfall bei unterschiedlichen Reibwerten am linken und rechten Fahrzeugrad dargestellt ist.

Das in der Figur dargestellte Verfahren wird zur Stabilisierung eines Kraftfahrzeugs mit Antriebsmotor im Antriebsfall durchgeführt, wobei die angetriebenen Räder unterschiedliche Reibwerte zur Fahrbahn aufweisen. Der Antriebsmotor kann eine Kombination aus Verbrennungsmotor und Elektromotor sein oder gegebenenfalls ausschließlich elektromotorisch ausgeführt sein, beispielsweise mit zwei Radnabenmotoren.

In einem ersten Verfahrensschritt 10 wird zunächst der Antriebsfall im Fahrzeug festgestellt. Dieser liegt vor, wenn ein antreibendes Moment an jedem antreibbaren Rad anliegt.

Im nächsten Verfahrensschritt 11 werden die Reibwerte am linken und rechten angetriebenen Fahrzeugrad ermittelt, und es wird überprüft, ob eine µ-split-Situation vorliegt, also die Reibwerte zwischen linkem und rechtem Fahrzeugrad differieren. Es kann insbesondere abgefragt werden, ob der Unterschied der Reibwerte einen zugeordneten Reibwert-Schwellenwert überschreitet. Ist dies nicht der Fall, wird der Nein-Verzweigung ("N") folgend wieder zum Beginn des Verfahrens zurückgekehrt und im Schritt 10 in regelmäßigen Abständen erneut abgefragt, ob noch eine Antriebssituation vorliegt, woraufhin im nächsten Verfahrensschritt 11 wiederum die Bestimmung der Reibwerte und die Abfrage erfolgt, ob die Reibwerte sich unterscheiden.

Falls im Schritt 11 festgestellt wird, dass die Reibwerte an den angetriebenen Rädern sich unterscheiden, wobei der Unterschied einen zugeordneten Grenzwert überschreitet, wird der Ja-Verzweigung ("Y") folgend zum nächsten Verfahrensschritt 12 fortgefahren, gemäß dem das Moment an dem Rad mit höherem Reibwert modifiziert wird. Die Momente am Rad mit niedrigem Reibwert werden dagegen nicht beeinflusst. Am Rad mit höherem Reibwert kommt eine Änderung des antreibenden Momentes, ein Aufbringen eines Bremsmomentes und/oder eine sonstige Maßnahme in Betracht, über die die Momentenbilanz an diesem Rad beeinflusst werden kann, beispielsweise die Betätigung einer Kupplung im Antriebsstrang zu diesem Rad oder eines Radlaststellers. Es kann insbesondere das Antriebsmoment reduziert oder ein Bremsmoment erzeugt werden.

Im folgenden Verfahrensschritt 13 wird abgefragt, ob das Giermoment um die Fahrzeughochachse einen zugeordneten Schwellenwert unterschreitet. Die Schritte 12 und 13 stellen einen Regelkreis dar, bei dem das Giermoment ermittelt und das Moment am Rad mit höherem Reibwert modifiziert wird, solange das Giermoment den zugeordneten Schwellenwert noch nicht unterschreitet. Dementsprechend wird bei der Abfrage gemäß Schritt 13 der Nein-Verzweigung folgend wieder zum Verfahrensschritt 12 zurückgekehrt, solange das Giermoment den Schwellenwert noch nicht unterschritten hat. Wird dagegen das Giermoment unterschritten, wird der Ja-Verzweigung folgend fortgefahren; in diesem Fall ist die gewünschte Fahrzeugstabilisierung erfolgreich durchgeführt worden und ist das Verfahren beendet.

Der Giermoment-Schwellenwert kann gegebenenfalls von Fahrzeugzustands- bzw. -kenngrößen abhängen, beispielsweise der aktuellen Fahrzeuggeschwindigkeit und der Lenkgeometrie des Fahrzeugs.

## Patentansprüche

1. Verfahren zur Stabilisierung eines Fahrzeugs mit Antriebsmotor, bei dem für den Fall, dass zwei angetriebene Räder des Fahrzeugs einen unterschiedlich hohen Reibwert zur Fahrbahn aufweisen, das Giermoment um die Fahrzeughochachse und/oder eine mit dem Giermoment zusammenhängende Größe, das bzw. die im Antriebsfall aufgrund unterschiedlich antreibender Radkräfte entsteht, bestimmt und das Moment an dem Rad mit höherem Reibwert in der Weise beeinflusst wird, dass das Giermoment bzw. die damit zusammenhängende Größe einen zugeordneten Schwellenwert unterschreitet.

2. Verfahren nach Anspruch 1, **dadurch gekennzeichnet, dass** das Rad mit kleinerem Reibwert am Überschreiten eines Schlupf-Schwellenwerts erkannt wird.

3. Verfahren nach Anspruch 1 oder 2, **dadurch gekennzeichnet, dass** das Antriebsmoment am Rad mit höherem Reibwert reduziert wird.

4. Verfahren nach einem der Ansprüche 1 bis 3, **dadurch gekennzeichnet, dass** das Bremsmoment am Rad mit höherem Reibwert erhöht wird.

5. Verfahren nach einem der Ansprüche 1 bis 4, **dadurch gekennzeichnet, dass** eine Kupplung im Antriebsstrang zwischen dem Antriebsmotor und dem Rad mit höherem Reibwert betätigt wird.

6. Verfahren nach einem der Ansprüche 1 bis 5, **dadurch gekennzeichnet, dass** der Schwellenwert des Giermoments bzw. der damit zusammenhängenden Größe von mindestens einer Fahrzeugzustandsgröße oder Fahrzeugkenngröße abhängt.

7. Verfahren nach Anspruch 6, **dadurch gekennzeichnet, dass** der Schwellenwert des Giermoments bzw. der damit zusammenhängenden Größe von der Fahrzeuggeschwindigkeit abhängt.

8. Verfahren nach Anspruch 6 oder 7, **dadurch gekennzeichnet, dass** der Schwellenwert des Giermoments bzw. der damit zusammenhängenden Größe von der Lenkgeometrie des Fahrzeugs abhängt.

9. Verfahren nach einem der Ansprüche 1 bis 8, **dadurch gekennzeichnet, dass** die Räder über mindestens einen Elektromotor angetrieben werden.

10. Verfahren nach einem der Ansprüche 1 bis 9, **dadurch gekennzeichnet, dass** die Räder über einen Verbrennungsmotor angetrieben werden.

11. Regel- bzw. Steuergerät zur Durchführung des Verfahrens nach einem der Ansprüche 1 bis 10.

12. Fahrerassistenzsystem in einem Fahrzeug mit einem Regel- bzw. Steuergerät nach Anspruch 11.

13. Fahrerassistenzsystem nach Anspruch 12, **dadurch gekennzeichnet, dass** das Fahrerassistenzsystem zusätzlich zu einer Antriebsschlupfregelung vorgesehen ist.

14. Fahrzeug mit einem Verbrennungsmotor als Antriebsmotor und einem Fahrerassistenzsystem nach Anspruch 12 oder 13.

15. Fahrzeug mit mindestens einem Elektromotor als Antriebsmotor und einem Fahrerassistenzsystem nach Anspruch 12 bzw. 13 oder nach Anspruch 14.
